# FASCICULE DE BREVET EUROPEEN

(11) **EP 3 671 488 B1**
(45) Date de publication et mention de la délivrance du brevet: **17.04.2024**
(21) Numéro de dépôt: 19214860.9
(22) Date de dépôt: 10.12.2019
(51) Int. Cl.: G06F 12/06, G06F 17/16

(54) **SYSTÈME DE MULTIPLICATION DE MATRICES PAR BLOCS**
SYSTEM ZUR BLOCKWEISEN VERVIELFÄLTIGUNG VON MATRIZEN
SYSTEM FOR MULTIPLYING MATRICES BY BLOCKS

(30) Priorité: 20.12.2018 FR 1873594
(43) Date de publication de la demande: 24.06.2020
(73) Titulaire: Kalray, 38330 Montbonnot Saint Martin (FR)
(72) Inventeur: DUPONT DE DINECHIN, Benoît, 38000 Grenoble (FR); LE MAIRE, Julien, 38700 La Tronche (FR); BRUNIE, Nicolas, 38000 GRENOBLE (FR)
(74) Mandataire: de Jong, Jean Jacques

(56) Documents cités:
- JIAJIA LI ET AL: "An optimized large-scale hybrid DGEMM design for CPUs and ATI GPUs", PROCEEDING ICS '12 PROCEEDINGS OF THE 26TH ACM INTERNATIONAL CONFERENCE ON SUPERCOMPUTING, 25 juin 2012 (2012-06-25), page 377, XP055632925, DOI: 10.1145/2304576.2304626 ISBN: 978-1-4503-1316-2
- Andreas Hehn: "HIGH THROUGHPUT WITH GPUS", , 19 novembre 2018 (2018-11-19), XP055633072, Extrait de l'Internet: URL:https://indico.cern.ch/event/764011/co ntributions/3214768/attachments/1755004/28 45106/RAPID_workshop_20181119.pdf [extrait le 2019-10-16]
- Minseok Lee: "Turing Architecture and CUDA 10 New Features", , 7 novembre 2018 (2018-11-07), XP055633075, Extrait de l'Internet: URL:http://on-demand.gputechconf.com/gtc-k r/2018/pdf/HPC_Minseok_Lee_NVIDIA.pdf [extrait le 2019-10-16]

## Description

### Domaine

L'invention est relative à la multiplication de matrices de nombres représentés numériquement, notamment à des processeurs assistés d'accélérateurs matériels spécialisés pour les opérations de matrices.

### Arrière-plan

Les technologies d'intelligence artificielle, notamment l'apprentissage profond, sont particulièrement consommatrices de multiplications de grandes matrices, pouvant avoir plusieurs centaines de rangées et de colonnes. On assiste ainsi à l'émergence d'accélérateurs matériels spécialisés dans les multiplications de matrices en précision mixte.

La multiplication de grandes matrices est généralement effectuée par blocs, c'est-à-dire en passant par une décomposition des matrices en sous-matrices de taille adaptée aux ressources de calcul. Les accélérateurs sont ainsi conçus pour calculer efficacement les produits de ces sous-matrices.

Par exemple, NVidia propose dans son processeur graphique Volta des opérateurs matériels appelés coeurs de tenseurs, qui monopolisent chacun les ressources de plusieurs coeurs graphiques du processeur pour effectuer en parallèle de nombreux calculs intervenant dans la multiplication de sous-matrices. NVidia propose également dans son processeur intégré Xavier une unité NVDLA (« NVidia Deep Learning Accelerator »), indépendante des coeurs graphiques avec des coeurs de tenseurs, et spécialisée dans l'accélération de l'inférence neuronale. L'article de conférence ICS de 2012, intitulé "An Optimized Large-Scale Hybrid DGEMM design for CPUs and ATI GPUs" de JIAJIA LI ET AL, divulgue un procédé de multiplication de matrices chargées dans une mémoire locale partitionnée en plusieurs bancs.

Un tel accélérateur est dit « faiblement couplé » en ce qu'il reçoit des tâches à effectuer par lots préparés par un processeur hôte, et gère ensuite les tâches de manière indépendante du processeur hôte, notamment les accès à une mémoire partagée pour lire les données des matrices. L'accélérateur et le processeur hôte fonctionnent ainsi de façon asynchrone, de sorte que le processeur hôte et l'accélérateur sont en concurrence pour les accès mémoire et doivent se synchroniser régulièrement pour que le processeur hôte récupère les résultats des tâches et communique de nouvelles tâches.

### Résumé

On prévoit de façon générale un procédé de multiplication de matrices, comprenant les étapes suivantes :
a) stocker une première matrice source par rangées dans une mémoire partagée, d'où il résulte que des éléments consécutifs d'une rangée de la matrice sont stockés à des adresses mémoire consécutives ;
b) stocker une deuxième matrice source par colonnes dans la mémoire partagée, d'où il résulte que des éléments consécutifs d'une colonne de la matrice sont stockés à des adresses mémoire consécutives ;
c) en un seul cycle de transfert de la mémoire partagée vers des registres de processeur par un bus mémoire de N bits :
   - lire un mot de N bits dans une matrice source ;
   - écrire K segments consécutifs du mot à une position désignée dans K registres respectifs de N bits, K étant tel que N soit divisible par K ;
e) effectuer l'étape c) pour K = R rangées différentes de la première matrice source de manière à remplir R premiers registres, d'où il résulte que chacun des R premiers registres contient une sous-matrice différente de R rangées de N/R bits organisées dans R segments consécutifs du registre ;
f) effectuer l'étape c) pour K = Q colonnes différentes de la deuxième matrice source de manière à remplir Q deuxièmes registres, d'où il résulte que chacun des Q deuxièmes registres contient une sous-matrice différente de Q colonnes de N/Q bits organisées dans Q segments consécutifs du registre ; et
g) en réponse à l'exécution d'une instruction machine de multiplication de sous-matrices désignant comme premier opérande l'un des R premiers registres et comme deuxième opérande l'un des Q deuxièmes registres, effectuer en parallèle, à l'aide d'un opérateur matériel dédié, un produit scalaire de chaque segment du registre premier opérande par chaque segment du registre deuxième opérande, les segments des registres opérandes étant considérés comme des vecteurs.

Le procédé peut en outre comprendre les étapes consistant à recevoir dans une unité centrale de traitement d'un processeur une instruction machine de lecture-dispersion ; en réponse à l'instruction de lecture-dispersion, déléguer l'étape c) à un coprocesseur couplé à l'unité centrale, la position des segments et les registres étant désignés par l'instruction de lecture-dispersion ; recevoir dans l'unité centrale une instruction machine de multiplication de sous-matrices ; et en réponse à l'instruction de multiplication de sous-matrices, déléguer au coprocesseur l'étape g).

L'unité de traitement et le coprocesseur peuvent être couplés selon une architecture VLIW, le procédé comprenant une étape d'exécution simultanée d'une instruction de lecture-dispersion et d'une instruction de multiplication de sous-matrices, contenues dans un même paquet d'instructions reçu par l'unité centrale, d'où il résulte que l'instruction de lecture-dispersion prépare une prochaine sous-matrice opérande tandis que l'instruction de multiplication de sous-matrices opère sur des sous-matrices opérandes courantes.

L'opérateur matériel peut être configuré pour accumuler chaque produit scalaire dans un segment respectif d'un registre destination désigné par l'instruction, avec le contenu précédent du segment respectif, le procédé comprenant les étapes consistant à exécuter l'instruction de multiplication de sous-matrices R fois en désignant à chaque fois une paire différente de registres opérandes de même rang parmi les R premiers registres et les Q deuxièmes registres, et un même jeu de registres destination.

Les éléments de chaque matrice source peuvent avoir une précision configurable parmi 8, 16 et 32 bits.

On prévoit également un processeur comprenant un bus de données de N bits configuré pour accéder à une mémoire ; une unité centrale de traitement connectée au bus de données ; un coprocesseur couplé à l'unité centrale, comprenant des registres de travail de N bits ; une unité de traitement d'instructions dans l'unité centrale, configurée pour, en réponse à une instruction machine de lecture-dispersion reçue par l'unité centrale, accéder en lecture à une adresse mémoire et déléguer au coprocesseur le traitement du mot correspondant de N bits arrivant sur le bus de données ; une unité de commande de registres dans le coprocesseur, configurée par l'unité centrale en réponse à l'instruction de lecture-dispersion, pour diviser le mot arrivant sur le bus de données en K segments et écrire les K segments à une même position dans K registres respectifs, la position et les registres étant désignés par l'instruction de lecture-dispersion.

Le coprocesseur peut comprendre une matrice d'opérateurs matériels de produit scalaire, chaque opérateur configuré pour effectuer simultanément le produit scalaire de deux vecteurs contenus dans deux segments de deux registres opérandes respectifs, les rangs des deux segments dans les registres opérandes étant fixés par la position de l'opérateur dans la matrice d'opérateurs, et les registres opérandes étant désignés par une instruction machine de multiplication de sous-matrices reçue par l'unité centrale, d'où il résulte que les registres opérandes contiennent des sous-matrices opérandes respectives, et la matrice d'opérateurs produit une sous-matrice résultat.

Les opérateurs peuvent être configurés pour accumuler les produits scalaires dans des segments respectifs de registres destination désignés par l'instruction de multiplication de sous-matrices.

Les éléments de chaque sous-matrice opérande peuvent avoir une précision configurable parmi 8, 16 et 32 bits.

### Description sommaire des dessins

Des modes de réalisation seront exposés dans la description suivante, faite à titre non limitatif en relation avec les figures jointes parmi lesquelles :
[Fig. 1] la figure 1 est un schéma-bloc d'un processeur intégrant un coprocesseur fortement couplé à une unité centrale de traitement ;
[Fig. 2] les figures 2A à 2D illustrent différentes étapes de remplissage de registres du coprocesseur à partir de données d'une matrice stockées en mémoire ;
[Fig. 3] la figure 3 est un schéma-bloc d'un mode de réalisation d'une unité matérielle de calcul du coprocesseur conçue pour faire une multiplication de deux sous-matrices en réponse à une seule instruction machine ;
[Fig. 4] la figure 4 est un schéma-bloc d'un opérateur de produit scalaire utilisé dans l'unité de calcul de la figure 3 ;
[Fig. 5] la figure 5 est un schéma-bloc d'un autre mode de réalisation d'une unité matérielle de calcul du coprocesseur conçue pour faire une multiplication de deux sous-matrices en réponse à une seule instruction machine ;
[Fig. 6] la figure 6 est un schéma-bloc d'un opérateur de produit scalaire utilisé dans l'unité de calcul de la figure 5 ;
[Fig. 7] la figure 7 est un schéma-bloc d'un mode de réalisation d'opérateur de produit scalaire configurable ; et
[Fig. 8] la figure 8 est un schéma-bloc d'un mode de réalisation d'une unité matérielle de calcul du coprocesseur conçue pour faire une multiplication de sous-matrices de tailles différentes en réponse à une seule instruction machine.

### Description détaillée

Les accélérateurs matériels dédiés à la multiplication de matrices sont confrontés à des difficultés liées à l'alimentation des unités de calcul de l'accélérateur avec des données de matrices stockées dans une mémoire partagée, sans provoquer une famine des unités de calcul ou une sous-exploitation de ces unités. Par exemple, le format de stockage des données en mémoire peut être inadapté au format requis par les unités de calcul, de sorte qu'une latence et des tampons de données peuvent être introduits pour réorganiser les données.

Ces difficultés sont exacerbées lorsque l'accélérateur est faiblement couplé et fonctionne de façon asynchrone avec un processeur hôte qui orchestre les tâches de l'accélérateur. En effet, le processeur hôte et l'accélérateur, fonctionnant chacun de façon autonome, peuvent entrer en conflit d'accès à la mémoire partagée. De plus, un mécanisme de synchronisation entre le processeur hôte et l'accélérateur peut provoquer l'arrêt de l'un ou l'autre en attendant l'arrivée à un point de synchronisation.

Une difficulté supplémentaire survient lorsque les éléments des matrices ont une précision configurable parmi plusieurs valeurs.

Pour soulager ces difficultés, on prévoit une architecture de processeur intégrant un coprocesseur fortement couplé, ayant ses propres registres de travail, et un mécanisme particulier de transfert de données entre la mémoire et les registres du coprocesseur.

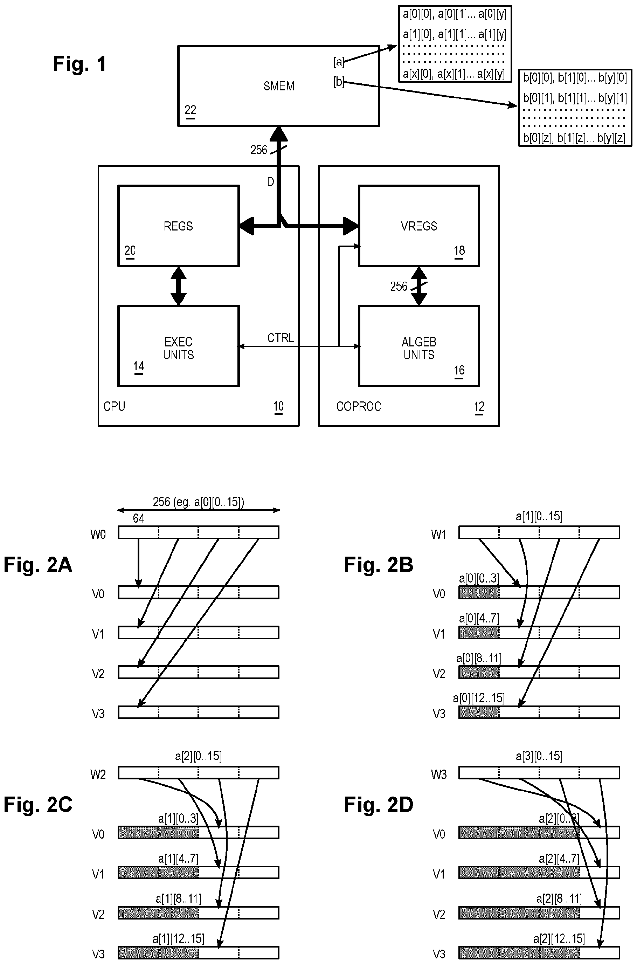

La figure 1 est un schéma-bloc d'une telle architecture de processeur. Elle comprend une unité centrale de traitement (CPU) générique 10 fortement couplée à un coprocesseur 12 intégrant des opérateurs matériels dédiés au calcul de produits de matrices. Par « couplage fort » on entend que le coprocesseur obéit cycle par cycle à des instructions machine qui sont exécutées dans l'unité centrale et qui sont mises en oeuvre par des unités d'exécution matérielles 14.

Plus spécifiquement, certaines instructions machine du jeu d'instructions du processeur incorporent des commandes dédiées au coprocesseur. Lorsque ces instructions parviennent à une unité d'exécution correspondante 14 de l'unité centrale, l'unité d'exécution configure le fonctionnement du coprocesseur par des lignes de commande CTRL. Le coprocesseur est câblé pour obéir immédiatement aux signaux présentés sur ces lignes de commande. En fait, le coprocesseur est une extension des unités d'exécution 14 de l'unité centrale, obéissant à une extension d'un jeu d'instructions génériques du processeur. Ainsi, hormis l'adaptation des unités d'exécution à la commande du coprocesseur, l'unité centrale 10 peut être d'un type générique, permettant notamment d'exécuter un système d'exploitation ou un programme compilé à partir d'un langage de programmation générique.

Le coprocesseur 12 comprend des unités matérielles de calcul algébrique 16, intégrant notamment des opérateurs matériels dédiés au calcul de multiplications de matrices. Le coprocesseur intègre en outre son propre jeu de registres de travail 18, indépendant d'un jeu de registres 20 classique de l'unité centrale 10.

Les registres 18 et 20 sont reliés à une mémoire partagée 22 par un bus de données D de N bits. Des bus d'adresses et de commande de la mémoire, obéissant à des unités d'exécution classiques de l'unité centrale, ne sont pas représentés. Les registres 18 du coprocesseur ont la même taille N que le bus de données et sont configurés pour obéir à des commandes d'une unité d'exécution 14 de l'unité centrale.

Deux matrices à multiplier [a] et [b] sont initialement stockées dans la mémoire partagée 22. Selon le langage de programmation utilisé, une matrice est stockée par défaut par rangées (format dit « row-major »), à savoir que les éléments d'une même rangée se trouvent à des adresses consécutives, ou par colonnes (format dit « column-major »), à savoir que les éléments d'une même colonne se trouvent à des adresses consécutives. Le langage de programmation C utilise le premier format, tandis que le Fortran utilise le deuxième format. Quoiqu'il en soit, des bibliothèques standard d'algèbre linéaire (BLAS) exploitées depuis ces langages de programmation prévoient des paramètres de transposition pour passer une matrice d'un format à un autre selon les besoins des calculs.

Pour les besoins de la présente architecture, les deux matrices à multiplier sont stockées selon des formats complémentaires, par exemple la première matrice [a] est stockée par rangées, tandis que la deuxième matrice [b] est stockée par colonnes. La matrice [b] est ainsi stockée sous forme transposée. La figure 1 illustre le contenu de la mémoire pour une matrice [a] de x+1 rangées et y+1 colonnes et une matrice [b] de y+1 rangées et z+1 colonnes. La matrice [b], ayant un nombre de rangées égal au nombre de colonnes de la matrice [a], est multipliable par la matrice [a].

Le coprocesseur 12 est conçu pour multiplier, de manière entièrement câblée, deux sous-matrices des matrices source, la première sous-matrice [A] ayant un nombre fixe Q de rangées, et la deuxième sous-matrice [B] ayant un nombre fixe de colonnes que l'on supposera pour l'instant égal à Q. La dimension restante des sous-matrices, que l'on appellera ci-après profondeur, est configurable en fonction de la précision souhaitée pour les éléments des matrices. La multiplication de ces sous-matrices produit donc une sous-matrice résultat [C] de Q×Q éléments.

Le nombre Q détermine les ressources matérielles nécessaires à effectuer la multiplication. Pour les applications d'intelligence artificielle, la valeur Q = 4 offre un compromis raisonnable et sera utilisée à titre d'exemple dans la suite. En effet, dans les calculs d'intelligence artificielle on utilise plutôt des nombres de 8 ou 16 bits, rarement de 32 bits, en représentation flottante, fractionnaire ou entière, résultant en des opérateurs moins complexes que ceux requis pour traiter les nombres à virgule flottante « simple précision » et « double précision » classiquement utilisés dans des unités centrales génériques, et respectivement codés sur 32 et 64 bits.

Par ailleurs, chaque sous-matrice à multiplier est considérée comme ayant une taille globale de N bits, à savoir la taille du bus de données D, que l'on supposera égale à 256 bits à titre d'exemple dans la suite. Ainsi, dans les exemples considérés ci-après, les sous-matrices ont 4 rangées ou colonnes de profondeur 64 bits. Cette profondeur est occupée, selon les applications, par huit octets, quatre mots de 16 bits, deux mots de 32 bits, ou un mot de 64 bits. Il peut s'agir d'entiers ou de nombres en virgule fixe ou flottante.

Compte tenu de cette structure, un objectif est d'alimenter le coprocesseur avec des séries de sous-matrices à multiplier en exploitant pleinement le bus mémoire D. En théorie, il suffirait de deux lectures pour lire une quantité de données correspondant à deux sous-matrices. Mais l'organisation des matrices source en mémoire ne permet pas cela directement dans un cas général. En effet, 256 bits consécutifs en mémoire couvrent des données de rangées (ou colonnes) consécutives de profondeur quelconque, et ne contiennent pas 4 sous-rangées (ou sous-colonnes) alignées pouvant former une sous-matrice.

Pour contourner cette complication, on étend le jeu d'instructions du processeur par une instruction machine de lecture mémoire spéciale, que l'on désignera par instruction de lecture-dispersion ou « load-scatter » et qui a K variantes notées load. 0 à load. 3 pour K = 4. Une instruction de lecture-dispersion désigne K registres 18 du coprocesseur, notés V0 à V3 pour K = 4, et l'adresse mémoire où lire un mot W de 256 bits. A l'exécution de l'instruction dans l'unité centrale 10, alors que la mémoire présente le mot W sur le bus, une unité de commande de registres du coprocesseur 12 est configurée pour diviser le mot W en K segments de N/K bits et écrire ces segments respectivement dans les K registres désignés. En d'autres termes, le mot W est « dispersé » dans les registres. La position à laquelle les segments sont écrits dans les registres désignés est déterminée par la variante de l'instruction de lecture-dispersion exécutée.

Les figures 2A à 2D illustrent l'exécution des variantes de l'instruction de lecture-dispersion sur des matrices source [a] et [b] de profondeur supérieure à 256 bits. On suppose à titre d'exemple que les éléments des matrices sont des mots de 16 bits.

A la figure 2A, une instruction load. 0 est exécutée. L'adresse mémoire véhiculée dans l'instruction désigne, par exemple, le premier élément de la première rangée de la matrice [a], à savoir l'élément a[0][0]. Le mot WO retourné sur le bus contient donc les éléments a[0][0] à a[0][15]. La variante de l'instruction configure les registres V0 à V3 pour recevoir les quatre segments respectifs du mot WO dans leur premier quart.

A la figure 2B, une instruction load. 1 est exécutée. L'adresse mémoire désigne l'élément a[1][0]. Le mot W1 retourné sur le bus contient donc les éléments a[1][0] à a[1][15]. La variante de l'instruction configure les registres V0 à V3 pour recevoir les quatre segments respectifs du mot W1 dans leur deuxième quart.

A la figure 2C, une instruction load. 2 est exécutée. L'adresse mémoire désigne l'élément a[2][0]. Le mot W2 retourné sur le bus contient donc les éléments a[2][0] à a[2][15]. La variante de l'instruction configure les registres V0 à V3 pour recevoir les quatre segments respectifs du mot W2 dans leur troisième quart.

A la figure 2D, une instruction load. 3 est enfin exécutée. L'adresse mémoire désigne l'élément a[3][0]. Le mot W3 retourné sur le bus contient donc les éléments a[3][0] à a[3][15]. La variante de l'instruction configure les registres V0 à V3 pour recevoir les quatre segments respectifs du mot W3 dans leur quatrième quart.

Au terme de ces quatre lectures-dispersions, chacun des registres V0 à V3 contient une sous-matrice [A] consécutive de 4x4 mots de 16 bits (aussi notée 4x4x16) dans le sens des rangées de la matrice source [a]. Les rangées de chaque sous-matrice sont contenues dans quatre segments respectifs du registre V correspondant. Les registres V0 à V3, contenant des sous-matrices [A], seront désignés VA0 à VA3.

En procédant de manière similaire pour la deuxième matrice [b] et quatre registres VB0 à VB3, chacun de ces registres reçoit une sous-matrice [B] consécutive de 4x4x16 dans le sens des colonnes de la matrice source [b]. Les colonnes de chaque sous-matrice sont contenues dans quatre segments respectifs du registre VB correspondant.

Avec cette procédure, on obtient dans les registres du coprocesseur quatre sous-matrices [A] et quatre sous-matrices [B] multipliables en huit cycles d'horloge consécutifs. On atteint ainsi un taux de transfert d'une sous-matrice par cycle, ce qui est optimal, car la largeur complète du bus est utilisée à chaque cycle.

Les segments des registres VA et VB, contenant des rangées ou des colonnes de sous-matrices, peuvent être traités ci-après comme des vecteurs. Ainsi, un registre VAi contient quatre vecteurs A[0] à A[3] et un registre VBj contient quatre vecteurs B[0] à B[3], chaque vecteur ayant quatre composantes de 16 bits.

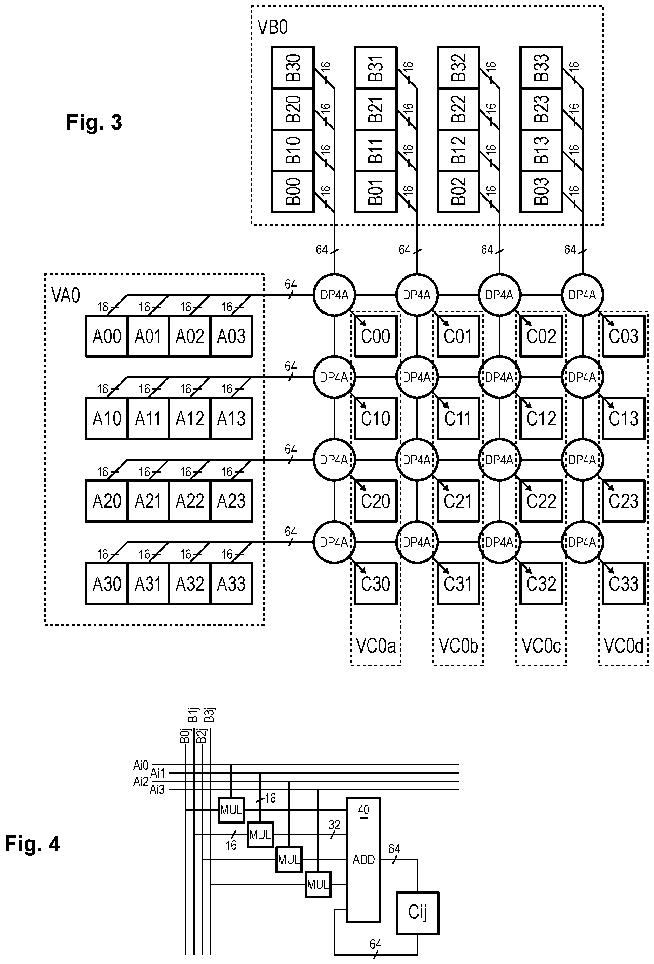

La figure 3 est un schéma-bloc d'un mode de réalisation d'une unité matérielle de calcul 16 du coprocesseur, destinée à effectuer une multiplication de deux sous-matrices [A] et [B] en réponse à une seule instruction machine dédiée que l'on notera mm4a. Ce mode de réalisation correspond à l'exemple considéré aux figures 2A à 2B, où les éléments de matrice ont une taille de 16 bits.

L'unité de calcul comprend une matrice de 4x4 opérateurs matériels de produit scalaire et accumulation notés DP4A, où le nombre 4 désigne la dimension des vecteurs. Un opérateur DP4A de la rangée i et colonne j est câblé pour effectuer le produit scalaire des vecteurs A[i] et B[j] contenus respectivement dans des registres VA et VB, et accumuler le produit scalaire dans une cellule Cij d'une sous-matrice résultat [C]. La cellule Cij peut être tout ou partie d'un segment de taille appropriée d'un registre VC du coprocesseur. Une taille confortable est 64 bits, ce qui implique quatre registres VCa à VCd pour stocker la sous-matrice résultat [C]. Les registres VA, VB et VC sont désignés par une instruction mm4a en cours d'exécution dans l'unité centrale 10, ici les registres VA0, VB0 et VC0a-VC0d.

Les registres VC sont configurés pour préserver l'organisation en Q segments des registres VA et VB. Dans le présent exemple, où Q = 4 et chaque élément résultat est codé sur 64 bits, chacun des 4 segments des registres VC contient un seul élément. Comme cela est représenté à titre d'exemple, les registres VC sont organisés pour que les quatre segments d'un même registre stockent des éléments de rangées différentes.

Une fois les calculs terminés sur la sous-matrice résultat, dans ce cas particulier de segments contenant un seul élément, les contenus des quatre registres VC peuvent être transférés en mémoire en quatre cycles à des adresses correspondant aux positions des colonnes de la sous-matrice [C] dans la matrice résultat complète [c], contribuant ainsi à une matrice résultat [c] stockée par colonnes (« column-major »).

Les registres VC pourraient aussi être organisés de façon complémentaire pour que les quatre segments d'un même registre stockent des éléments de colonnes différentes. Dans ce cas, les contenus des quatre registres VC peuvent être transférés en mémoire en quatre cycles correspondant aux positions des rangées de la sous-matrice [C] dans la matrice résultat complète [c], contribuant à une matrice résultat [c] stockée par rangées (« row-major »).

De préférence, on étend le jeu d'instructions du processeur par une instruction machine de transposition d'un tuple contenant Q registres. Dans le cas Q = 4, cette instruction dénotée mt4 prend les contenus de quatre registres désignés VCa, VCb, VCc, VCd et remplit quatre autres registres désignés VDa, VDb, VDc, VDd, tels que :
VDa reçoit respectivement dans ses segments les premiers segments de VCa, de VCb, de VCc et de VCd.
VDb reçoit respectivement dans ses segments les seconds segments de VCa, de VCb, de VCc et de VCd.
VDc reçoit respectivement dans ses segments les troisièmes segments de VCa, de VCb, de VCc et de VCd.
VDd reçoit respectivement dans ses segments les quatrièmes segments de VCa, de VCb, de VCc et de VCd.

Comme suite à l'exécution de cette instruction, chacun des registres VCa, VCb, VCc, VCd peut être stocké en mémoire pour contribuer à une rangée de la matrice résultat [c] stockée par rangées (« row-major »).

La figure 4 est un schéma-bloc d'un opérateur de produit scalaire DP4A de position (i, j) dans la matrice d'opérateurs. L'opérateur traite les vecteurs A[i] et B[j]. Plus spécifiquement, l'opérateur comprend quatre multiplieurs MUL de 16 bits recevant chacun une composante respective (Ai0 à Ai3) du vecteur A[i] comme premier multiplicande, et la composante correspondante (B0j à B3j) du vecteur B[j] comme deuxième multiplicande. Les quatre produits, codés sur 32 bits, sont fournis à un multi-additionneur 40 connecté pour accumuler la somme des produits dans un segment de registre Cij de 64 bits. Par « accumuler » on entend que le segment Cij reçoit la somme des produits et du contenu précédent du segment Cij. Le multi-additionneur 40 est ainsi câblé pour effectuer la somme de quatre nombres de 32 bits et un nombre de 64 bits.

En théorie, l'unité de calcul de la figure 3, câblée en logique combinatoire, produit instantanément la matrice résultat [C] en réaction à une instruction mm4a qui désigne les registres VA, VB et VC à utiliser. En pratique, une telle unité de calcul, compte tenu des délais de propagation de la logique combinatoire, mettra plus d'un cycle d'horloge du processeur à établir le résultat. Ainsi l'unité de calcul, notamment chaque opérateur DP4A, est généralement conçue en structure pipeline, signifiant que le calcul est décomposé en plusieurs étapes synchronisées sur des cycles d'horloge successifs, mais qu'on peut initier un nouveau calcul, c'est-à-dire exécuter une nouvelle instruction mm4a, à chaque cycle d'horloge.

Ainsi, une structure pipeline est peu optimale pour faire des calculs isolés. Par contre, en organisant de façon adéquate les calculs successifs, de manière à maintenir le pipeline alimenté en permanence, la structure pipeline peut être efficace à 100 % après une phase initiale d'amorçage du pipeline et avant une phase finale de vidage du pipeline.

Le fait qu'on précharge dans les registres du coprocesseur huit sous-matrices à l'aide des instructions de lecture-dispersion (figures 2A-2D), et que les sous-matrices à multiplier se trouvent ainsi dans les registres selon une organisation immédiatement exploitable par l'unité de calcul, permet de maintenir le pipeline alimenté au moins pour le calcul de quatre produits de sous-matrices. Ces quatre produits de sous-matrices, effectuables en exécutant quatre instructions mm4a consécutives désignant les mêmes registres destination VC, fournissent une matrice résultat [C] de 4x4 qui est le produit d'une sous-matrice source 4x16 par une sous-matrice source 16x4.

En outre, la configuration à fort couplage entre le coprocesseur et l'unité centrale permet d'organiser le processeur en architecture VLIW (« Very Large Instruction Word »). Alors, on peut exécuter une instruction de lecture-dispersion et une instruction mm4a dans un même paquet VLIW, c'est-à-dire exécuter ces deux instructions en parallèle, ce qui occupe le bus mémoire pour chercher les prochaines sous-matrices pendant qu'on effectue les calculs sur les sous-matrices courantes.

Le tableau 1 ci-dessous présente une séquence d'instructions qui permet de multiplier une matrice [a] de 8x32 par une matrice [b] de 32x8 pour fournir une matrice [c] de 8x8 sans temps mort et en exploitant toute la bande passante du bus mémoire et de l'unité de calcul en parallèle. Des instructions placées sur une même ligne correspondent à des instructions exécutées dans un même paquet VLIW. Pour des raisons de compacité de notation et de clarté, les registres du coprocesseur sont désignés par Ax et By pour les sous-matrices multiplicandes et Cz pour la sous-matrice résultat, en sachant que tous ces registres, choisis dans le jeu de registres 18, sont de même nature.

Le premier paramètre des instructions identifie les registres destination. Les paramètres subséquents des instructions identifient normalement une adresse mémoire ou des registres opérandes - on a utilisé ici une notation explicative qui détaille ce que reçoivent les registres destination. On suppose que les registres C sont tous à 0 avant les opérations, ou bien que les opérateurs sont configurés par un drapeau des instructions mm4a pour désactiver l'accumulation lors de la première écriture dans un registre C, ce qui est illustré par le signe « = » (écriture directe) à la place du signe « += » (accumulation).

Les phases 0 et 1 correspondent à ce que l'on a décrit en relation avec les figures 2A-2D.

**[Tableau 1]**

| | |
|---|---|
| Phase 0: charger les sous-matrices a[0..3] [0..3] à a[0..3] [12..15] | |
| load.0 A0A1A2A3 <- a[0] [0..15] | |
| load.1 A0A1A2A3 <- a[1] [0..15] | |
| load.2 A0A1A2A3 <- a[2] [0..15] | |
| load.3 A0A1A2A3 <- a[3] [0..15] | |
| Phase 1: charger les sous-matrices b[0..3] [0..3] à b[12..15] [0..3] | |
| load.0 80818283 <- b[0..15] [0] | |
| load.1 80818283 <- b[0..15] [1] | |
| load.2 80818283 <- b[0..15] [2] | |
| load.3 80818283 <- b[0..15] [3] | |
| Phase 2: charger les sous-matrices a[4.. 7] [0..3] à a[4.. 7] [12..15] et calculer c [0..3] [0..3] | |
| load.0 A4A5A6A7 <- a[4] [0..15]; mm4a C0C1C2C3 = A0 * 80 | |
| load.1 A4A5A6A7 <- a[5] [0..15]; mm4a C0C1C2C3 += A1 * 81 | |
| load.2 A4A5A6A7 <- a[6] [0..15]; mm4a C0C1C2C3 += A2 * B2 | |
| load.3 A4A5A6A7 <- a[7] [0..15]; mm4a C0C1C2C3 += A3 * B3 | |
| Phase 3: charger les sous-matrices b[0..3] [4..7] à b[12..15] [4..7] et calculer c[4..7][0..3] | |
| load.0 B4B5B6B7 <- b[0..15] [4]; mm4a C4C5C6C7 = A4 * 80 | |
| load.1 B4B5B6B7 <- b[0..15] [5]; mm4a C4C5C6C7 += A5 * B1 | |
| load.2 B4B5B6B7 <- b[0..15] [6]; mm4a C4C5C6C7 += A6 * B2 | |
| load.3 B4B5B6B7 <- b[0..15] [7]; mm4a C4C5C6C7 += A7 * B3 | |
| Phase 4: charger les sous-matrices a[0..3] [16..19] à a[0..3] [28..31] et calculer c[0..3] [4..7] | |
| load.0 A8A9A10A11 <- a[0] [16..31]; mm4a C8C9C10C11 = A0 * B4 | |
| load.1 A8A9A10A11 <- a[1][16..31]; mm4a C8C9C10C11 += A1 * 85 | |
| load.2 A8A9A10A11 <- a[2] [16..31]; mm4a C8C9C10C11 += A2 * B6 | |
| load.3 A8A9A10A11 <- a[3] [16..31]; mm4a C8C9C10C11 += A3 * B7 | |
| Phase 5: charger les sous-matrices b[16..19] [0..3] à b[28..31] [0..3] et calculer c[4..7][4..7] | |
| load.0 B8B9B10B11 <- b[16..31] [0]; mm4a C12C13C14C15 = A4 * B4 | |
| load.1 B8B9B10B11 <- b[16..31] [1]; mm4a C12C13C14C15 += A5 * B5 | |
| load.2 B8B9B10B11 <- b[16..31] [2]; mm4a C12C13C14C15 += A6 * B6 | |
| load.3 B8B9B10B11 <- b[16..31][3]; mm4a C12C13C14C15 += A7 * 87 | |
| Phase 6: charger les sous-matrices a[4.. 7] [16..19] à a[4.. 7] [28..31] et compléter c[0..3] [0..3] | |
| load.0 A12A13A14A15 <- a[4] [16..31]; mm4a C0C1C2C3 += A8 * B8 | |
| load.1 A12A13A14A15 <- a[5] [16..31]; mm4a C0C1C2C3 += A9 * B9 | |
| load.2 A12A13A14A15 <- a[6] [16..31]; mm4a C0C1C2C3 += A10 * B10 | |
| load.3 A12A13A14A15 <- a[7][16..31]; mm4a C0C1C2C3 += A11 * B11 | |
| Phase 7 : charger les sous-matrices b[16..19] [4..7] à b[28..31][4..7] et compléter c[4..7][0..3] | |
| load.0 B12B13B14B15 <- b[16..31][4]; mm4a C4C5C6C7 += A12 * B8 | |
| load.1 B12B13B14B15 <- b[16..31] [5]; mm4a C4C5C6C7 += A13 * B9 | |
| load.2 B12B13B14B15 <- b[16..31] [6]; mm4a C4C5C6C7 += A14 * B10 | |
| load.3 B12B13B14B15 <- b[16..31] [7]; mm4a C4C5C6C7 += A15 * 811 | |
| Phase 8: compléter c[0..3][4..7] | |
| ; | mm4a C8C9C10C11 += A8 * B12 |
| ; | mm4a C8C9C10C11 += A9 * B13 |
| ; | mm4a C8C9C10C11 += A10 * B14 |
| ; | mm4a C8C9C10C11 += A11 * B15 |
| Phase 9: compléter c[4..7][4..7] | |
| ; | mm4a C12C13C14C15 += A12*B12 |
| ; | mm4a C12C13C14C15 += A13*B13 |
| ; | mm4a C12C13C14C15 += A14*814 |
| ; | mm4a C12C13C14C15 += A15*B15 |

Après la phase 9 et quelques cycles nécessaires au vidage du pipeline de l'unité de calcul, les registres C0 à C15 contiennent la matrice résultat de la multiplication, une matrice 8x8x64.

On notera que les phases 6 à 9 réutilisent les registres C des phases 2 à 5, à savoir les mêmes sous-matrices résultat c[0..3][0..3], c[0..3][4..7], c[4..7][0..3] et c[4..7][4..7]. En effet, lors des phases 2 à 5 on calcule les sous-matrices c[][] seulement sur la première moitié de la profondeur des matrices source (éléments 0 à 15). Lors des phases 6 à 9 on met à jour les sous-matrices c[][] avec l'influence de la deuxième moitié de la profondeur des matrices source (éléments 16 à 31). Ce calcul s'étend naturellement à une profondeur quelconque en mettant à jour les sous-matrices c[][] avec l'influence des tranches suivantes de 256 bits dans la profondeur des matrices [a] et [b].

Les matrices source évoquées à titre d'exemple ont une profondeur multiple de la largeur N du bus mémoire. Lorsque cette propriété n'est pas applicable, les opérations de lecture-dispersion affectant la dernière partie des rangées (ou colonnes) lisent des mots dont une première partie contient la fin de rangée (ou colonne), et la deuxième partie contient des données inexploitables (soit le début d'une rangée ou colonne désalignée, soit des données arbitraires après la fin de la matrice). Dans ce cas, les données de la deuxième partie des mots sont remplacées par des zéros, et les mots ainsi réajustés sont traités normalement comme exposé précédemment.

Comme on l'a précédemment évoqué, la profondeur des matrices varie selon la précision choisie pour les éléments. Dans ce qui précède, on a considéré des matrices d'éléments de 16 bits. Les éléments peuvent également être de 8 ou 32 bits sans que cela n'affecte l'organisation des matrices source en mémoire ni leur transfert dans les registres du coprocesseur. Certaines modifications peuvent cependant être faites dans l'unité de calcul 16 du coprocesseur.

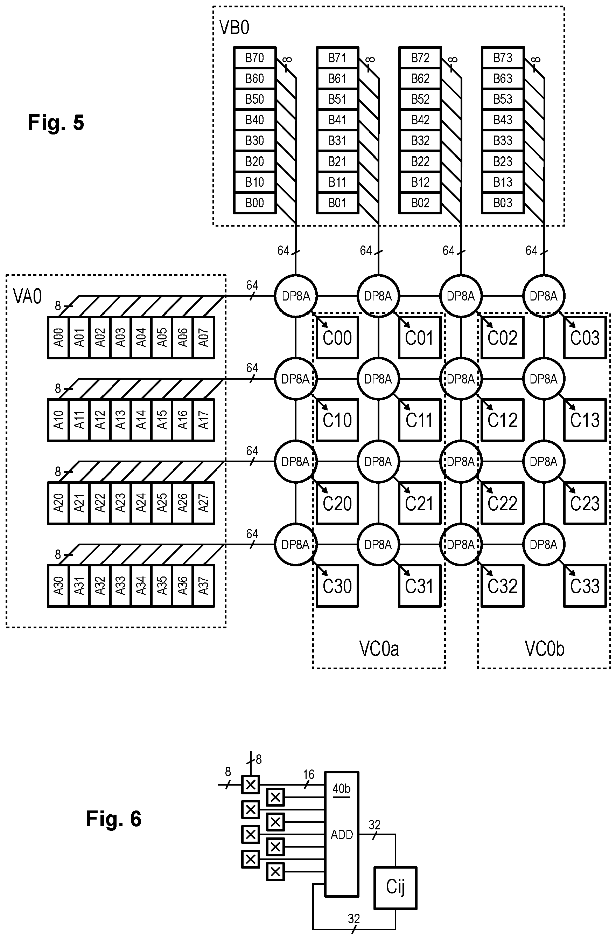

La figure 5 est un schéma-bloc d'un mode de réalisation d'une unité de calcul 16 du coprocesseur, destinée à effectuer une multiplication de deux sous-matrices [A] et [B] d'éléments de 8 bits en réponse à une seule instruction machine dédiée que l'on notera mm8a.

Le transfert des éléments des matrices source de la mémoire vers les registres VA et VB du coprocesseur s'effectue de la même manière que précédemment, avec une série de quatre instructions de lecture-dispersion. Il en résulte simplement, comme cela est représenté pour les registres opérandes VA0 et VB0, que les quatre segments des registres contiennent des vecteurs de 8 éléments de 8 bits au lieu de 4 éléments de 16 bits.

Les opérateurs de produit scalaire, ici notés DP8A, sont alors configurés pour calculer simultanément huit produits et leur somme. La précision des résultats est de 32 bits au lieu de 64 bits, d'où il résulte que seulement deux registres VC0a et VC0b sont requis pour stocker la sous-matrice résultat [C].

Comme cela est représenté à titre d'exemple, les registres VC sont organisés pour que chaque segment stocke deux éléments de rangée de la sous-matrice résultat. Par exemple, le registre VC0a contient dans ses segments respectifs, les paires (C00, C01), (C10, C11), (C20, C21) et (C30, C31). Dans ce cas, les contenus des deux registres VC ne sont pas directement transférables en mémoire dans le bon ordre pour former une sous-matrice 4x4 de la matrice résultat [c].

Avec une instruction d'écriture classique, il faudrait 8 cycles pour écrire les contenus des registres VC0a et VC0b pour former une matrice résultat [c] stockée par rangées, à savoir quatre cycles utilisant seulement un quart de la largeur du bus pour transférer les quatre segments du registre VC0a, et ensuite quatre cycles utilisant seulement un quart de la largeur du bus pour transférer les quatre segments du registre VC0b. Cela entraîne un gaspillage de bande passante de 75 %.

De préférence, on étend le jeu d'instructions du processeur par une instruction complémentaire à l'instruction de lecture-dispersion, que l'on désignera par instruction de rassemblement-écriture ou « gather-store ». L'exécution de cette instruction par l'unité centrale configure le coprocesseur pour concaténer sur le bus mémoire Q segments pris dans Q registres désignés. La position du segment dans les registres est définie par une variante correspondante de l'instruction.

Dans le présent exemple, avec Q = 4, on exécute quatre instructions de rassemblement-écriture pour traiter quatre registres VC0a, VC0b, VC1a et VC1b contenant deux sous-matrices résultat. Le mécanisme est similaire à celui des figures 2A-2D en inversant le sens des flèches.

Au premier cycle, le mot WO contient les éléments C00, C01 du premier segment du registre VC0a, suivis des éléments C02, C03 du premier segment du registre VC0b, suivis des quatre éléments de la première rangée de la deuxième sous-matrice stockée dans les premiers segments des registres VC1a et VC1b (non représentés). Les trois cycles restants transfèrent ainsi les deuxième à quatrième rangées des deux sous-matrices. On forme ainsi deux sous-matrices adjacentes par rangées dans une matrice résultat stockée par rangées en occupant pleinement la bande passante du bus.

En relation avec la figure 3, on a indiqué que les contenus des registres VC0a à VC0d pouvaient être transférés en mémoire en quatre cycles à l'aide d'une instruction d'écriture classique pour former une matrice résultat stockée par colonnes. En utilisant au lieu de cela quatre instructions de rassemblement-écriture, on écrit la sous-matrice en mémoire dans le format par rangées. En d'autres termes, dans le cas particulier où chaque registre VC contient exactement quatre éléments, la sous matrice peut être transférée en mémoire par rangées ou par colonnes selon le type d'instruction d'écriture qu'on choisit, et cela en occupant pleinement la bande passante du bus.

Une alternative à l'utilisation d'instructions de rassemblement-écriture est d'exploiter, dans le cas Q = 4, l'instruction de transposition mt4 précédemment décrite, qui permet en un cycle de remplir quatre registres VD0a, VD0b, VD1a, VD1b à partir des registres VC0a, VC0b, VC1a, VC1b. Les registres VD0a, VD0b, VD1a, VD1b peuvent être alors écrits de manière classique dans une matrice résultat stockée par rangées en occupant pleinement la bande passante du bus.

La figure 6 est un schéma-bloc d'un opérateur de produit scalaire DP8A de position (i, j) dans la matrice d'opérateurs. Il comprend huit multiplieurs de 8 bits recevant chacun une composante respective (Ai0 à Ai7) du vecteur A[i] comme premier multiplicande, et la composante correspondante (B0j à B7j) du vecteur B[j] comme deuxième multiplicande. Les huit produits, codés sur 16 bits, sont fournis à un multi-additionneur 40b connecté pour accumuler la somme des produits dans un segment de registre Cij de 32 bits.

De façon similaire, lorsque les éléments des matrices sont des mots de 32 bits, le transfert de la mémoire vers les registres du coprocesseur s'effectue toujours de la même manière, avec une série de quatre instructions de lecture-dispersion. Les segments des registres contiennent alors des vecteurs de deux éléments de 32 bits. Les opérateurs de produit scalaire sont alors notés DP2A et accumulent deux produits de nombres de 32 bits dans un segment de registre de 64 ou 128 bits. L'instruction de multiplication de matrices est alors notée mm2a.

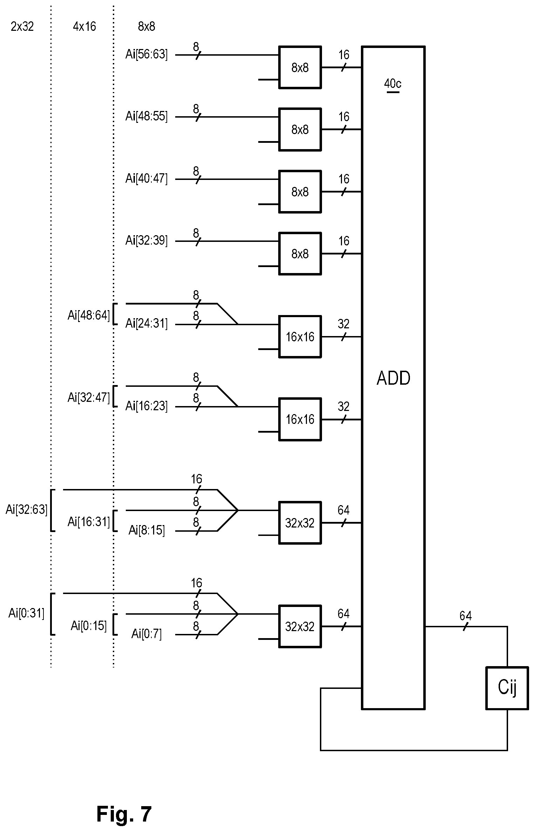

La figure 7 est un schéma-bloc d'un mode de réalisation d'opérateur de produit scalaire configurable pour traiter des éléments de matrice de précision réglable parmi 8, 16 et 32 bits. Il comprend deux multiplieurs de nombres de 32 bits, deux multiplieurs de nombres de 16 bits et quatre multiplieurs de nombres de 8 bits, dont les sorties sont fournies à un multi-additionneur 40c, connecté pour accumuler la somme des produits dans un segment de registre Cij de 64 ou 128 bits.

On n'a représenté que les connexions relatives à un premier vecteur opérande Ai. Les bits utilisés du segment de registre correspondant sont indiqués entre crochets.

Les multiplieurs 32x32 sont connectés pour traiter les deux premières composantes des vecteurs, quelle que soit leur précision. Les seules deux composantes d'un vecteur 2x32 bits sont appliquées à toutes les lignes d'entrée des multiplieurs 32x32. Les autres multiplieurs produisent un résultat nul.

Les multiplieurs 16x16 sont connectés pour traiter les troisième et quatrième composantes de vecteurs 4x16 ou 8x8 bits. Pour un vecteur 4x16 bits, les deux premières composantes sont appliquées respectivement aux 16 premières lignes d'entrée des deux multiplieurs 32x32, et les deux composantes suivantes sont appliquées respectivement à toutes les lignes d'entrée des deux multiplieurs 16x16.

Pour un vecteur de 8x8 bits, les quatre premières composantes sont appliquées respectivement aux 8 premières lignes d'entrée des deux multiplieurs 32x32 et des deux multiplieurs 16x16, et les composantes restantes sont appliquées respectivement à toutes les lignes d'entrée des multiplieurs 8x8.

L'organisation de la connexion des entrées des multiplieurs aux registres est déterminée par la nature de l'instruction de multiplication de matrices exécutée, à savoir mm2a, mm4a ou mm8a.

Comme on l'a précédemment indiqué, les éléments de matrice peuvent être des nombres entiers ou à virgule flottante (dans ce dernier cas, on utilise plutôt les tailles 16 bits et 32 bits). Les multiplieurs et additionneurs sont configurés en conséquence. Si on souhaite traiter des nombres entiers et à virgule flottante, les multiplieurs auront une structure reconfigurable basée sur une structure de multiplication à virgule flottante.

Lorsque les éléments des matrices ont une précision de 32 bits, on a proposé que la précision des résultats pouvait être de 64 bits ou 128 bits. Une précision de 64 bits peut suffire si on accepte un certain niveau d'erreur, notamment une saturation lors du traitement de nombres entiers, ou une erreur d'arrondi lorsqu'on traite des nombres à virgule fixe ou flottante.

Dans les exemples exposés, on a considéré que les deux matrices source à multiplier avaient des éléments de même précision. L'architecture décrite permet aussi de multiplier des matrices de précision mixte. Par exemple, dans le cas d'une multiplication d'une matrice [a] d'éléments de 16 bits par une matrice [b] d'éléments de 8 bits, on prévoit les opérations suivantes.

Quatre registres A0-A3 sont remplis par une première série de quatre instructions de lecture-dispersion pour contenir quatre sous-matrices 4x4x16 prises dans les quatre premières rangées de la matrice source [a]. En d'autres termes, ces matrices contiennent les rangées a[0][0..15] à a[3][0..15].

Quatre autres registres A4-A7 sont remplis par une deuxième série de quatre instructions de lecture-dispersion pour contenir quatre sous-matrices 4x4x16 prises dans les quatre rangées suivantes de la matrice [a]. En d'autres termes, ces matrices contiennent les rangées a[4][0..15] à a[7][0..15].

Quatre registres B0-B3 sont remplis par une troisième série de quatre instructions de lecture-dispersion pour contenir huit sous-matrices 4x4x8 prises dans les quatre premières colonnes de la matrice [b]. En d'autres termes, ces matrices contiennent les colonnes b[0..31][0] à b[0..31][3].

Les deux moitiés du registre B0 contiennent deux sous-matrices dont l'une b[0..3][0..3] peut être multipliée avec la sous-matrice a[0..3][0..3] du registre A0 pour contribuer à la sous-matrice résultat c[0..3][0..3]. L'autre sous-matrice b[4..7][0..3] du registre B0 peut être multipliée avec la sous-matrice a[4..7][0..3] du registre A4 pour contribuer à la sous-matrice résultat c[4..7][0..3]. En d'autres termes, on organise les multiplications des deux moitiés du registre B0 pour contribuer à deux sous-matrices différentes de la matrice résultat [c].

Les deux moitiés du registre B1 contiennent deux sous-matrices que l'on peut multiplier respectivement avec les sous-matrices des registres A1 et A5 pour contribuer respectivement aux mêmes sous-matrices résultat c[0..3][0..3] et c[4..7][0..3].

De même, les deux moitiés du registre B2 contiennent respectivement deux sous-matrices à multiplier avec les sous-matrices des registres A2 et A6, et les deux moitiés du registre B3 contiennent respectivement deux sous-matrices à multiplier avec les sous-matrices des registres A3 et A7, à chaque fois pour contribuer aux mêmes sous-matrices résultat c[0..3][0..3] et c[4..7][0..3], c'est-à-dire sans changer les registres VC pendant ces opérations.

Pour procéder à la multiplication des contenus des registres, on peut utiliser deux variantes de l'opération de multiplication mm4a à utiliser dans deux cycles consécutifs désignant deux registres A différents (par exemple A0 et A4), un même registre B correspondant (par exemple B0), et deux jeux de deux registres C pour contenir le résultat. En référence à l'unité de multiplication de sous-matrices 4x4x16 de la figure 3, les deux variantes configurent d'abord les opérateurs DP4A pour utiliser seulement les 8 bits de poids faible des entrées B des multiplieurs (appelées demi-entrées). La première variante reconfigure en outre les opérateurs pour relier les 16 demi-entrées de 8 bits aux quatre premiers octets contenus dans chacun des segments Bi0 à Bi3 du registre B0. La deuxième variante reconfigure les opérateurs pour relier les 16 demi-entrées de 8 bits aux quatre derniers octets contenus dans chacun des segments Bi0 à Bi3 du registre B0.

Dans des applications de multiplication de matrices de précision mixte, on peut concevoir que les deux matrices multiplicandes soient de même taille en nombre de bits, et donc que la matrice de précision plus faible soit plus grande en nombre d'éléments que la matrice de précision plus grande. Une matrice multiplicande d'éléments de 8 bits pourrait ainsi avoir deux fois plus de rangées ou de colonnes que la matrice multiplicande correspondante d'éléments de 16 bits. Dans ce cas, on peut envisager une unité de calcul pour multiplier des sous-matrices Q×Q×16 par des sous-matrices Qx(2Q)x8, ou inversement (2Q)xQx8.

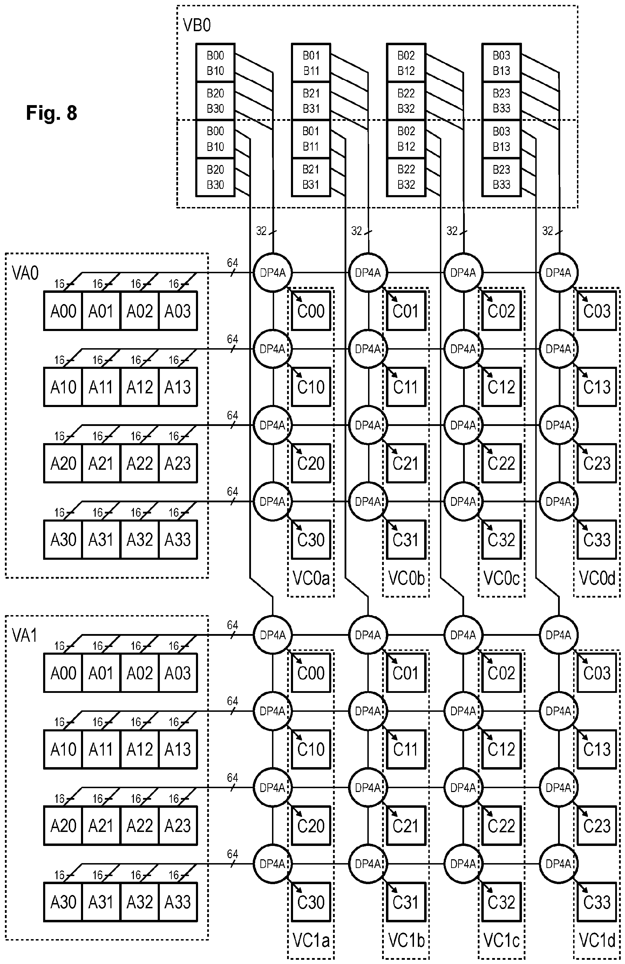

La figure 8 est un exemple d'unité de calcul correspondante pour Q = 4, dérivée de l'unité de calcul de la figure 3. Elle est configurée pour répondre à une exécution simultanée des deux variantes précédemment indiquées de l'instruction mm4a en produisant deux sous-matrices résultat 4x4 dans deux jeux de registres VC à partir de deux sous-matrices 4x4x16 contenues dans les registres VA0 et VA1 et une sous-matrice 4x8x8 contenue dans le registre VB0. Le registre VB0 est considéré comme subdivisé en deux moitiés, chacune avec 4 segments contenant chacun un vecteur de quatre octets, et les opérateurs de produit scalaire DP4A sont organisés en deux sous-matrices de 4x4 qui traitent simultanément les deux moitiés respectives du registre VB0.

Dans un cas plus général, on peut prévoir une unité de calcul comprenant des opérateurs de produit scalaire organisés dans une matrice RxQ avec R > Q. Dans ce cas, on configure les instructions de lecture-dispersion pour, dans une première série de R cycles, remplir R registres A différents, et, dans une deuxième série de Q cycles, remplir Q registres B différents. Chaque registre A contient alors une sous-matrice de Q rangées avec des éléments de taille N/Q bits, et chaque registre B contient R/Q sous-matrices de Q colonnes avec des éléments de taille N/R bits, où N est la largeur du bus mémoire et la taille des registres, et est divisible par Q et par R. Chaque instruction de multiplication lit le contenu de R/Q registres A et d'un registre B, pour produire une sous-matrice de dimensions RxQ.

Pour que les sous-matrices d'un registre A et d'un registre B soient multipliables, il faut que leurs vecteurs aient la même dimension. La valeur N étant de préférence une constante égale à la taille du bus mémoire, cela implique que les deux sous-matrices ont des précisons différentes si Q ≠ R. En pratique Q et R varient selon un rapport 1, 2 ou 4 selon les combinaisons de précisions choisies pour les matrices parmi 8, 16 et 32 bits.

## Revendications

1. Procédé de multiplication de matrices, comprenant les étapes suivantes :
a) stocker une première matrice source (a) par rangées dans une mémoire partagée, d'où il résulte que des éléments consécutifs d'une rangée de la première matrice source sont stockés à des adresses mémoire consécutives ;
b) stocker une deuxième matrice source (b) par colonnes dans la mémoire partagée, d'où il résulte que des éléments consécutifs d'une colonne de la deuxième matrice source sont stockés à des adresses mémoire consécutives ;
c) en un seul cycle de transfert de la mémoire partagée vers des registres (18) de processeur par un bus mémoire de N bits :
- lire un mot de N bits dans une des première et deuxième matrices source;
- écrire K segments consécutifs du mot de N bits à une position désignée dans K registres respectifs (V) de N bits, K étant tel que N soit divisible par K ;
d) effectuer l'étape c) pour K = R rangées différentes de la première matrice source (a) de manière à remplir R premiers registres (VA), d'où il résulte que chacun des R premiers registres (VA0-VA3) contient une sous-matrice différente (A) de R rangées de N/R bits organisées dans R segments consécutifs (A0j-A3j) du registre ;
e) effectuer l'étape c) pour K = Q colonnes différentes de la deuxième matrice source (b) de manière à remplir Q deuxièmes registres (VB), d'où il résulte que chacun des Q deuxièmes registres (VB0-VB3) contient une sous-matrice différente (B) de Q colonnes de N/Q bits organisées dans Q segments consécutifs (Bi0-Bi3) du registre ; et
f) en réponse à l'exécution d'une instruction machine de multiplication de sous-matrices désignant comme premier opérande (VA0) l'un des R premiers registres et comme deuxième opérande (VB0) l'un des Q deuxièmes registres, effectuer en parallèle, à l'aide d'un opérateur matériel dédié (DP4A), un produit scalaire de chaque segment (A0j-A3j) du registre premier opérande par chaque segment du registre deuxième opérande (Bi0-Bi3), les segments des registres opérandes étant considérés comme des vecteurs.

2. Procédé selon la revendication 1, comprenant les étapes suivantes :
- recevoir dans une unité centrale de traitement d'un processeur une instruction machine de lecture-dispersion ;
- en réponse à l'instruction de lecture-dispersion, déléguer l'étape c) à un coprocesseur couplé à l'unité centrale, la position désignée des K segments consécutifs et les registres étant désignés par l'instruction de lecture-dispersion ;
- recevoir dans l'unité centrale une instruction machine de multiplication de sous-matrices ; et
- en réponse à l'instruction machine de multiplication de sous-matrices, déléguer au coprocesseur l'étape f).

3. Procédé selon la revendication 2, dans lequel l'unité de traitement et le coprocesseur sont couplés selon une architecture VLIW, le procédé comprenant une étape d'exécution simultanée d'une instruction de lecture-dispersion et d'une instruction de multiplication de sous-matrices, contenues dans un même paquet d'instructions reçu par l'unité centrale, d'où il résulte que l'instruction de lecture-dispersion prépare une prochaine sous-matrice opérande tandis que l'instruction de multiplication de sous-matrices opère sur des sous-matrices opérandes courantes.

4. Procédé selon la revendication 1, dans lequel l'opérateur matériel est configuré pour accumuler chaque produit scalaire dans un segment respectif (Cij) d'un registre destination (VC) désigné par instruction machine de multiplication de sous-matrices, avec le contenu précédent du segment respectif, le procédé comprenant les étapes suivantes :
exécuter l'instruction machine de multiplication de sous-matrices R fois en désignant à chaque fois une paire différente de registres opérandes de même rang (VAx, VBx) parmi les R premiers registres et les Q deuxièmes registres, et un même jeu de registres destination (VC0-VC3).

5. Procédé selon la revendication 1, dans lequel les éléments de chaque matrice source ont une précision configurable parmi 8, 16 et 32 bits.

6. Processeur comprenant :
- un bus de données de N bits configuré pour accéder à une mémoire ;
- une unité centrale de traitement (CPU) connectée au bus de données ;
- un coprocesseur couplé à l'unité centrale, comprenant des registres de travail (18) de N bits ;
- une unité de traitement d'instructions dans l'unité centrale, configurée pour, en réponse à une instruction machine de lecture-dispersion reçue par l'unité centrale, accéder en lecture à une adresse mémoire et déléguer au coprocesseur le traitement du mot correspondant (W) de N bits arrivant sur le bus de données ;
- une unité de commande de registres dans le coprocesseur, configurée par l'unité centrale en réponse à l'instruction de lecture-dispersion, pour diviser le mot (W) arrivant sur le bus de données en K segments et écrire les K segments à une même position dans K registres respectifs (V0-V3), la position et les registres étant désignés par l'instruction machine de lecture-dispersion.

7. Processeur selon la revendication 6, comprenant dans le coprocesseur une matrice d'opérateurs matériels de produit scalaire (DP4A), chaque opérateur configuré pour effectuer simultanément le produit scalaire de deux vecteurs (A0j-A3j, Bi0-Bi3) contenus dans deux segments de deux registres opérandes respectifs (VA0, VB0), les rangs des deux segments dans les registres opérandes étant fixés par la position de l'opérateur dans la matrice d'opérateurs, et les registres opérandes étant désignés par une instruction machine de multiplication de sous-matrices reçue par l'unité centrale, d'où il résulte que les registres opérandes contiennent des sous-matrices opérandes respectives, et la matrice d'opérateurs produit une sous-matrice résultat.

8. Processeur selon la revendication 7, dans lequel les opérateurs sont configurés pour accumuler les produits scalaires dans des segments respectifs de registres destination (VC) désignés par l'instruction machine de multiplication de sous-matrices.

9. Processeur selon la revendication 7, dans lequel les éléments de chaque sous-matrice opérande ont une précision configurable parmi 8, 16 et 32 bits.

## Patentansprüche

1. Verfahren zur Vervielfältigung von Matrizen, umfassend die Schritte:
a) Speichern einer ersten Quellmatrix (a) in Reihen in einem gemeinsam genutzten Speicher, wobei aufeinanderfolgende Elemente einer Reihe der ersten Quellmatrix in aufeinanderfolgenden Speicheradressen gespeichert werden;
b) Speichern einer zweiten Quellmatrix (b) in Spalten in dem gemeinsam genutzten Speicher, wobei aufeinanderfolgende Elemente einer Spalte der zweiten Quellmatrix in aufeinanderfolgenden Speicheradressen gespeichert werden;
c) in einem einzigen Transferzyklus von dem gemeinsam genutzten Speicher zu Prozessorregistern (18) über einen Speicherbus aus N Bit:
- Lesen eines Wortes aus N Bit in einer der ersten und zweiten Quellmatrizen;
- Schreiben von K aufeinanderfolgenden Segmenten des Wortes aus N Bit an eine bezeichnete Position in K jeweiligen Registern (V) aus N Bit, wobei K so gewählt ist, dass N durch K teilbar ist;
d) Durchführen von Schritt c) für K = R verschiedene Reihen der ersten Quellmatrix (a), um R erste Register (VA) zu füllen, wobei jedes der R ersten Register (VA0-VA3) eine verschiedene Untermatrix (A) von R Reihen von N/R Bit enthält, die in R aufeinanderfolgenden Segmenten (A0j-A3j) des Registers organisiert sind;
e) Durchführen von Schritt c) für K = Q verschiedene Spalten der zweiten Quellmatrix (b), um Q zweite Register (VB) zu füllen, wobei jedes der Q zweiten Register (VB0-VB3) eine verschiedene Untermatrix (B) aus Q Spalten von N/Q Bit enthält, die in Q aufeinanderfolgenden Segmenten (Bi0-Bi3) des Registers organisiert sind; und
(f) als Reaktion auf die Ausführung einer Maschinenanweisung zur Vervielfältigung von Untermatrizen, die als erste Operanden (VAO) eines der R ersten Register und als zweite Operanden (VBO) eines der Q zweiten Register bezeichnet werden, paralleles Durchführen, mit Hilfe eines dedizierten Hardware-Operators (DP4A), eines Skalarprodukts jedes Segments (A0j-A3j) des ersten Operandenregisters mit jedem Segment des zweiten Operandenregisters (Bi0-Bi3), wobei die Segmente der Operandenregister als Vektoren betrachtet werden.

2. Verfahren nach Anspruch 1, umfassend die Schritte:
- Empfangen in einer zentralen Verarbeitungseinheit eines Prozessors einer Maschinenanweisung zum Lesen und Streuen;
- als Reaktion auf die Anweisung zum Lesen und Streuen Delegieren von Schritt c) an einen mit der zentralen Einheit gekoppelten Koprozessor, wobei die bezeichnete Position der K aufeinanderfolgenden Segmente und die Register durch die Anweisung zum Lesen und Streuen bestimmt werden;
- Empfangen in der zentralen Einheit einer Maschinenanweisung zur Vervielfältigung von Untermatrizen; und
- als Reaktion auf die Maschinenanweisung zur Vervielfältigung von Untermatrizen Delegieren von Schritt f) an den Koprozessor.

3. Verfahren nach Anspruch 2, wobei die Verarbeitungseinheit und der Koprozessor gemäß einer VLIW-Architektur gekoppelt sind, wobei das Verfahren einen Schritt der gleichzeitigen Ausführung einer Anweisung zum Lesen und Streuen und einer Anweisung zur Vervielfältigung von Untermatrizen umfasst, die in demselben von der zentralen Einheit empfangenen Anweisungspaket enthalten sind, woraus sich ergibt, dass die Anweisung zum Lesen und Streuen eine nächste Operandenuntermatrix vorbereitet, während die Anweisung zur Vervielfältigung von Untermatrizen mit aktuellen Operandenuntermatrizen arbeitet.

4. Verfahren nach Anspruch 1, wobei der Hardwareoperator ausgebildet ist, um jedes Skalarprodukt in einem jeweiligen Segment (Cij) eines Zielregisters (VC), das durch die Maschinenanweisung zur Vervielfältigung von Untermatrizen bestimmt wird, mit dem vorherigen Inhalt des jeweiligen Segments zu akkumulieren, wobei das Verfahren die Schritte umfasst:
Ausführen der Maschinenanweisung zur Vervielfältigung von Untermatrizen R-mal, wobei jedes Mal ein anderes Paar von gleichrangigen Operandenregistern (VAx, VBx) aus den R ersten Registern und den Q zweiten Registern und ein gleicher Satz von Zielregistern (VC0-VC3) bestimmt wird.

5. Verfahren nach Anspruch 1, wobei die Elemente jeder Quellmatrix eine konfigurierbare Genauigkeit von 8, 16 oder 32 Bit aufweisen.

6. Prozessor, umfassend:
- einen Datenbus aus N Bit, der für den Zugriff auf einen Speicher ausgebildet ist;
- eine zentrale Verarbeitungseinheit (CPU), die mit dem Datenbus verbunden ist;
- einen mit der zentralen Einheit gekoppelten Koprozessor, der Arbeitsregister (18) mit N Bit umfasst;
- eine Anweisungsverarbeitungseinheit in der zentralen Einheit, die ausgebildet ist, um, als Reaktion auf eine von der Zentraleinheit empfangene Maschinenanweisung zum Lesen und Streuen, lesend auf eine Speicheradresse zuzugreifen und die Verarbeitung des entsprechenden Wortes (W) aus N Bit, das auf dem Datenbus ankommt, an den Koprozessor zu delegieren;
- eine Registersteuereinheit im Koprozessor, die von der zentralen Einheit als Reaktion auf die Anweisung zum Lesen und Streuen ausgebildet ist, um das auf dem Datenbus ankommende Wort (W) in K Segmente zu unterteilen und die K Segmente an einer gleichen Position in K jeweilige Register (V0-V3) zu schreiben, wobei die Position und die Register durch die Maschinenanweisung zum Lesen und Streuen bestimmt werden.

7. Prozessor nach Anspruch 6, der im Koprozessor eine Matrix von Hardwareoperatoren für das Skalarprodukt (DP4A) umfasst, wobei jeder Operator ausgebildet ist, um gleichzeitig das Skalarprodukt von zwei Vektoren (A0j-A3j, Bi0-Bi3) auszuführen, die in zwei Segmenten von zwei jeweiligen Operandenregistern (VAO, VBO) enthalten sind, wobei die Ränge der beiden Segmente in den Operandenregistern durch die Position des Operators in der Operatormatrix festgelegt sind und die Operandenregister durch eine von der zentralen Einheit empfangene Maschinenanweisung zur Vervielfältigung von Untermatrizen bestimmt werden, wodurch die Operandenregister jeweilige Operandenuntermatrizen enthalten und die Operatormatrix eine Ergebnisuntermatrix erzeugt.

8. Prozessor nach Anspruch 7, wobei die Operatoren ausgebildet sind, um die Skalarprodukte in jeweiligen Segmenten von Zielregistern (VC) zu akkumulieren, die durch die Maschinenanweisung zur Vervielfältigung von Untermatrizen bestimmt werden.

9. Prozessor nach Anspruch 7, wobei die Elemente jeder Operandenuntermatrix eine konfigurierbare Genauigkeit von 8, 16 oder 32 Bit aufweisen.

## Claims

1. A method for multiplying matrices, comprising the following steps:
a) storing a first source matrix (a) in row-major format in a shared memory, whereby consecutive elements of a row of the first source matrix are stored at consecutive memory addresses;
b) storing a second source matrix (b) in column-maj or format in the shared memory, whereby consecutive elements of a column of the second source matrix are stored at consecutive memory addresses;
c) in a single transfer cycle from the shared memory to processor registers (18) through an N-bit memory bus:
- reading an N-bit word in one of the first and second source matrixes;
- writing K consecutive segments of the N-bit word at a designated position in K respective N-bit registers (V), K being such that N is divisible by K;
d) performing step c) for K = R different rows of the first source matrix (a) so as to fill R first registers (VA), whereby each of the R first registers (VA0-VA3) contains a different submatrix (A) of R rows of N/R bits organized in R consecutive segments (A0j-A3j) of the register;
e) performing step c) for K = Q different columns of the second source matrix (b) so as to fill Q second registers (VB), whereby each of the Q second registers (VB0-VB3) contains a different submatrix (B) of Q columns of N/Q bits organized in Q consecutive segments (Bi0-Bi3) of the register; and
f) in response to the execution of a submatrix multiply machine instruction designating as first operand (VA0) one of the R first registers and as second operand (VB0) one of the Q second registers, carrying out in parallel, using a dedicated hardware operator (DP4A), a scalar product of each segment (A0j-A3j) of the first operand register by each segment of the second operand register (Bi0-Bi3), the segments of the operand registers being regarded as vectors.

2. The method according to claim 1, comprising the following steps:
- receiving in a central processing unit CPU of a processor a load-scatter machine instruction;
- in response to the load-scatter instruction, delegating step c) to a coprocessor coupled to the CPU, the designated position of the consecutive K segments and the registers being designated by the load-scatter instruction;
- receiving in the CPU a submatrix multiply instruction; and
- in response to the submatrix multiply machine instruction, delegating step f) to the coprocessor.

3. The method according to claim 2, wherein the CPU and the coprocessor are coupled according to a VLIW architecture, the method comprising a step of simultaneously executing a load-scatter instruction and a submatrix multiply instruction contained in a same instruction packet received by the CPU, whereby the load-scatter instruction prepares a next operand submatrix while the submatrix multiply instruction operates on current operand submatrices.

4. The method according to claim 1, wherein the hardware operator is configured to accumulate each scalar product in a respective segment (Cij) of a destination register (VC) designated by the submatrix multiply machine instruction, with the previous content of the respective segment, the method comprising the following steps:
executing the submatrix multiply machine instruction R times while designating each time a different pair of operand registers of same rank (VAx, VBx) among the first R registers and the second Q registers, and the same set of destination registers (VC0-VC3).

5. The method according to claim 1, wherein the elements of each source matrix have a configurable precision among 8, 16 and 32 bits.

6. A processor including:
- an N-bit data bus configured to access a memory;
- a central processing unit CPU connected to the data bus;
- a coprocessor coupled to the CPU, including a register file with N-bit registers (18);
- an instruction processing unit in the CPU, configured to, in response to a load-scatter machine instruction received by the CPU, read accessing a memory address and delegating to the coprocessor the processing of the corresponding N-bit word (W) presented on the data bus; and
- a register control unit in the coprocessor, configured by the CPU in response to the load-scatter instruction, to divide the word (W) presented on the data bus into K segments and writing the K segments at the same position in K respective registers (V0-V3), the position and the registers being designated by the load-scatter machine instruction.

7. The processor according to claim 6, comprising in the coprocessor an array of dot-product hardware operators (DP4A), each operator configured to simultaneously perform the scalar product of two vectors (AOj-A3j, Bi0-Bi3) contained in two segments of two respective operand registers (VA0, VB0), the ranks of the two segments in the operand registers being determined by the position of the operator in the operator array, and the operand registers being designated by a submatrix multiply machine instruction received by the CPU, whereby the operand registers contain respective operand submatrices, and the operator array produces a result submatrix.

8. The processor according to claim 7, wherein the operators are configured to accumulate the scalar products in respective segments of destination registers (VC) designated by the submatrix multiply machine instruction.

9. The processor according to claim 7, wherein the elements of each operand submatrix have a configurable precision among 8, 16 and 32 bits.
